# EUROPEAN PATENT APPLICATION

(11) **EP 4 721 830 A1**
(43) Date of publication of application: **08.04.2026**
(21) Application number: 24204292.7
(22) Date of filing: 02.10.2024
(51) Int. Cl.: B01D 9/00, C02F 1/22

(54) **A CRYSTALLIZATION METHOD OF LIQUID**

(71) Applicant: NG Nordic Finland Oy, 11120 Riihimäki (FI)
(72) Inventor: Niskanen, Mikko, 11120 Riihimäki (FI); Tuomanen, Teppo, 11120 Riihimäki (FI)
(74) Representative: Kolster Oy Ab

(57) **Abstract**

The invention relates to a crystallization method of liquid, wherein the method comprises the steps of: feeding liquid through a feeding inlet, by a feeder, into an internal space of a crystallization chamber; mixing, by mixing means, the liquid in the internal space of the crystallization chamber; cooling, by cooling means, the liquid within the internal space of the crystallization chamber for lowering temperature of the liquid such that ice crystals will be formed within the liquid; conveying, by conveyor means, at least part of the ice crystals along the internal space of the crystallization chamber and feeding out the at least part of the ice crystals from the crystallization chamber via a first outlet; and wherein the mixing, cooling and conveying are performed simultaneously within the internal space of the crystallization chamber.

## Description

### Field

The invention relates to a field of a crystallization method of liquid.

### Background

The known liquid treatment solutions utilizing evaporation to form concentrated liquid may be considered as energy intensive which require dedicated equipment to tolerate high temperatures during evaporation. Also, reverse osmosis, ultra- and nanofiltration, distillation processes, vaporization, UV-oxidation, chemical and electrochemical oxidation may have been used in water treatment facilities to form concentrated waste waters. However, known processes may have some drawbacks, for example, structures may be complex. Another alternative solution utilizes freeze crystallization which may have complex designs and practical challenges in obtaining desired purity and/or concentration levels.

Hence, there is a need for a more sophisticated solution to alleviate the issues of the known solution.

### Brief description

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### List of drawings

Example embodiments of the present invention are described below, by way of example only, with reference to the accompanying drawings, in which
Figures 1,2, 5-7 illustrate examples of a crystallization apparatus suitable for carrying out a crystallization method of liquid according to embodiments of the invention;
Figures 3 and 4 illustrate examples of details of a crystallization apparatus suitable for carrying out a crystallization method of liquid according to embodiments of the invention; and
Figure 8 illustrates am example of steps of crystallization method of liquid according to an embodiment of the invention.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

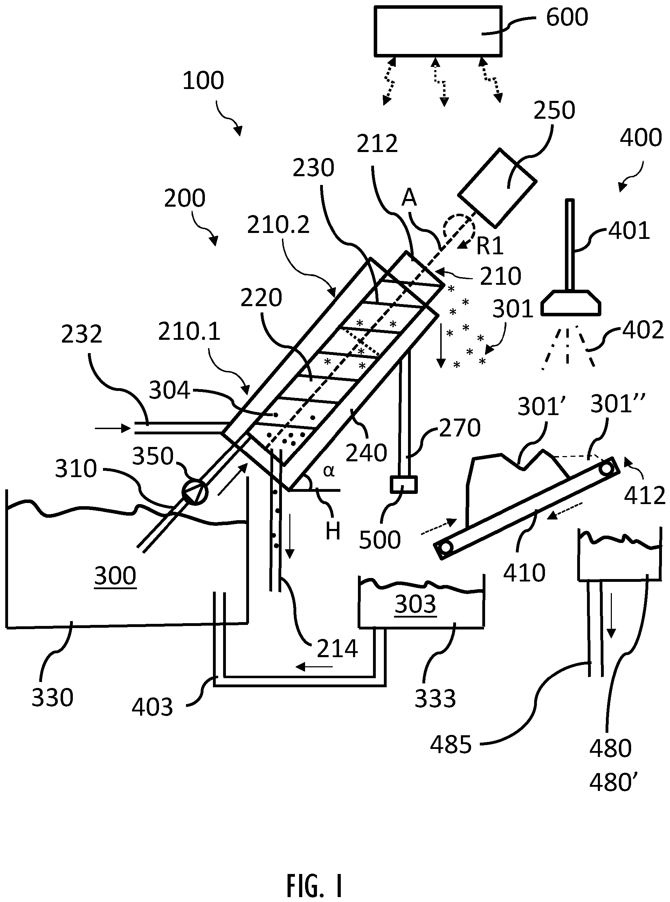

An aspect of the invention relates to a crystallization apparatus. Figures 1 - 7 disclose a crystallization apparatus according to embodiments of the invention. The crystallization apparatus disclosed in figures 1-4 may be used to carry out the crystallization method of liquid according to an embodiment.

According to an embodiment of the invention, a crystallization apparatus 100 of liquid 300 comprises: a crystallization chamber 200 comprising an internal space 210 having a first portion 210.1 and a second portion 210.2. The crystallization chamber 200 receives said liquid 300 via a feeding inlet 310 arranged within the crystallization chamber 200. A mixing means 220 arranged within the internal space at the first portion 210.1 and mixes the liquid therein. A cooling element 240 cools the liquid within the internal space 210 for lowering temperature of the liquid such that ice crystals 301 will be formed within the liquid. Conveyor means 230 extending at least within the internal space 210 and conveys at least part of the ice crystals 301 from the liquid towards a first outlet 212 arranged at the second portion 210.2 and to feed out via the first outlet 212 the at least part of the ice crystals 301 from the internal space 210 of the crystallization chamber 200.

Preferably the liquid is an aqueous solution. In other words, preferably, the liquid is an aqueous liquid. So, the liquid may comprise water which may form ice crystals when the temperature gets to the freezing point, as known, *per se,* by the skilled person in the art.

Advantageously, the crystallization apparatus renders it possible to efficiently form ice within the liquid and to be discharged from the internal space by yet a simple, safe and cost-efficient design. In other words, operating expense and/or capital expenditures are lower compared to known solutions. In geographical locations where the cold climate exists in several months per year, the operating expenses may be even lower and may require less energy for cooling the internal space 210 of the crystallization chamber 200. By utilizing low temperatures, at least portion of the liquid within the internal space of the crystallization chamber may undergo a phase transition so that ice crystals may be formed within the liquid. Formation of ice crystals may also result in more concentrated liquid solution within the internal space which may be advantageous in several applications while pure ice crystals are discharged from the internal space of the crystallization chamber. The crystallization apparatus may be well suited for treatment of various challenging liquid waste streams. Furthermore, the utilization of crystallization apparatus of liquid may result in minimizing liquid and solid waste.

It may be possible that majority of liquid will be extracted or recovered in the form of ice crystals. The ice crystals are formed of frozen water. In principle, pure water may freeze from complex solution (i.e., liquid) under simultaneous mixing, and ice crystal removal via the first outlet 212 of the crystallization chamber 200. So, substantially pure water in the form of ice may be collected and removed as solid ice particles. It may be desired that over about 90 wt-% of water will be extracted from the liquid whereas under about 10 wt-% will be impurities left into the unfrozen liquid. One of the aims and/or advantages is to get at least 90 wt-% of water out from the liquid so that only impurities will be left into the liquid. This means that ice crystals may be substantially free from impurities. It may be, in practice, that an amount of impurities has decreased to about 80 wt-% to 99 wt-% in water, meaning that ice crystals are almost pure water. In other words, the cleaning performance of the crystallization apparatus, according to embodiments of the invention, may be remarkable.

As illustrated in Figures 1-2, the first portion 210.1 and the second portion 210.2 may be arranged one after the another, i.e. sequentially. The internal space 210 may be a tube or a channel divided into two parts which form the first part 210.1 and the second part 210.2. The internal space 210 is substantially hollow space which is configured to receive the mixing means 220 and the conveyor means 230. The substantially hollow space may form a uniform space for receiving the mixing means 220 and the conveyor means 230 within the same space. The feeding inlet 310 may be arranged in connection with the crystallization chamber 200. Specifically, the feeding inlet 310 may be arranged in connection with the internal space 210 of the crystallization chamber 200. The feeding inlet 310 may be arranged within the first portion 210.1 of the crystallization chamber 200. In other words, the feeding inlet 310 may be arranged at the first portion 210.1.

The crystallization chamber 200 may receive said liquid 300 via a feeding inlet 310 into the internal space 210 of the crystallization chamber 200. The feeding inlet 310 may be connected with fluid connection with a reservoir or a container 330 of the liquid by a feeding channel. The feeding inlet 310 may comprises a detachable channel or a feeding pipe for connecting and disconnecting fluid connection from the reservoir 300. In other words, there may be a connector interface which couples the feeding inlet 310 comprising the channel with the crystallization chamber 300. The feeding channel may comprise at least one pump 350 for feeding liquid from the reservoir or the container into the internal space 210 of the crystallization chamber 200. In other words, the feeding inlet 310 may comprise the feeding channel comprising the pump 350 arranged in fluid connection with the reservoir or container of liquid 330. So, the feeding inlet 310 may be understood as a feeding inlet channel for feeding liquid from the reservoir into the internal space 210 of the crystallization chamber 200. The pump 350 may be configured to suck the liquid from the reservoir and introduce the liquid into the internal space 210. However, it may be possible that the pump may be operated so that it may suck also the liquid from the internal space.

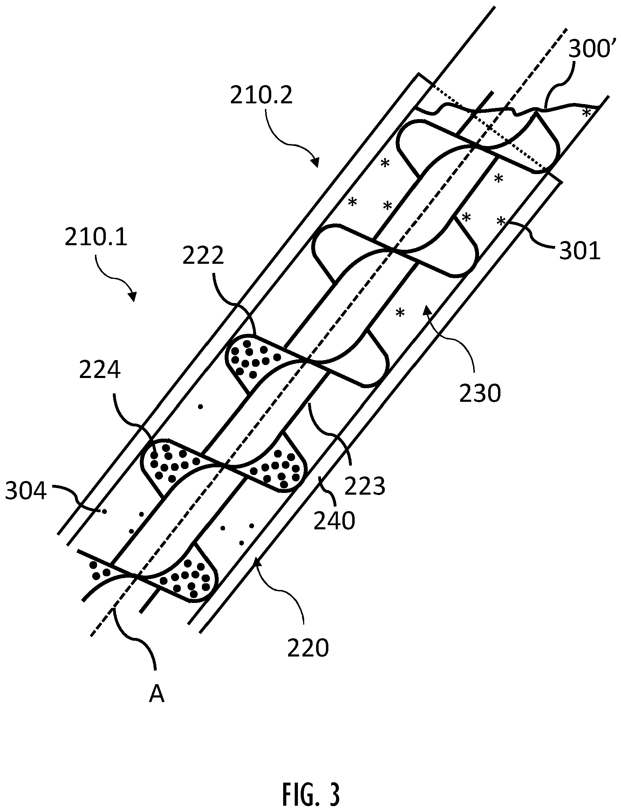

According to an embodiment, the internal space 210 comprises a cylindrical shape having a longitudinal central axis A and wherein the longitudinal central axis A is arranged at an inclined angle α in relation to a horizontal plane H, wherein the inclined angle is within a range of about 30° - about 70°. In other words, the internal space 210 may be arranged to be at the inclined angle α. Advantageously, by utilizing an inclined angle α within a range of about 30° - about 70°, mixing, cooling and conveying may be performed simultaneously within the internal space of the crystallization chamber. In this document, the inclined angle α may also be called as an inclination angle α. In other words, the internal space 210 may be cylindrical having the longitudinal central axis A. The liquid within the internal space may have a surface 300' which may be substantially horizontal and forms a wedge like edge for the liquid within the internal space which may help controlling discharge of ice crystals from the internal space 210, see Figures 3-4. The shape of the surface of the liquid depends on the mixing and/or conveying speed (rotation). The mixing means may be located within the first portion of the internal space and the conveyor means may be located within the second portion of the internal space.

According to an embodiment, the first portion 210.1 comprises a second outlet 214 to feed out at least portion of unfrozen liquid from the internal space 210. So, in other words, the first portion 210.1 comprises the second outlet 214 to discharge at least portion of the liquid from the internal space 210. Advantageously, since the second outlet 214 may be arranged at an opposite end than the first outlet 212, it renders possible that within the internal space 210 the liquid may form substantially gradient concentration distribution. In other words, nearer the second outlet 214, the liquid may have a greater concentration than nearer the first outlet 212. Mixing, however, may balance the concentration distribution and conveyor means conveys ice crystals towards the first outlet 212. Furthermore, by feeding unfrozen liquid out from the internal space 210 makes it possible to add liquid into the internal space 210 during the process to be treated with the crystallization apparatus of liquid.

The second outlet 214 may have a control means to control flow of the unfrozen liquid from the internal space 210 of the crystallization chamber 200 via the second outlet 214. The second outlet 214 may comprise at least one valve to control flow of the unfrozen liquid from the internal space 210 of the crystallization chamber 200 via the second outlet 214. In other words, the control means at the second outlet 214 may control discharge of the liquid from the internal space 210 of the crystallization chamber 200 via the second outlet 214. The second outlet 214 may comprise an outlet channel. The second outlet 214 and/or the outlet channel may comprise a pump for letting out the unfrozen liquid from the internal space 210 of the crystallization chamber 200. The pump of the second outlet is not shown in Figures 1-2. It may be possible that substantially mainly ice crystals (frozen matter) are discharged via the first outlet and mainly liquid (unfrozen matter) may be discharged via the second outlet. Advantageously, the crystallization apparatus may be specifically suited for water treatment. By the apparatus impurities within the liquid such as unwanted metals, organic compounds and/or ions originating from industrial process may be recovered within the liquid which may be discharged via the second outlet while substantially pure ice crystals may be recovered via the first outlet.

In some cases, the liquid becomes more and more concentrated within the internal space 210 during the process, and in case a desired concentration is obtained within the internal space 210 of the crystallization chamber 200, liquid having the desired concentration may be discharged from the internal space 210 via the second outlet 214. It may be possible, that all of the liquid having the desired concentration is discharged at once. This means that the internal space 210 of the crystallization chamber 200 may be emptied occasionally. Therefore, the process may be interpreted as a semi-batch process. After emptying the internal space 210, the process starts from the beginning, that is, liquid 300 to be treated with the crystallization apparatus 100 will be introduced into the internal space 210 of the crystallization chamber 200 via the inlet 310. The liquid within the internal space 210 will be cooled so that ice crystals will be formed within the liquid. The ice crystals may be discharged via the first outlet and concentrate (liquid within the internal space) may be discharged via the second outlet.

According to an embodiment, the cooling element 240 also cools the liquid within the internal space 210 such that also salt crystals 304 will be formed within the liquid and wherein the second outlet 214 feeds out also at least part of the salt crystals 304 within the unfrozen liquid from the internal space 210. Salt crystals are preferably in solid form.

In case the liquid comprises salt, the apparatus renders it possible to discharge also salt crystals 304 from the internal space 210 of the crystallization chamber. In practice, it is possible that ice crystals 301 convey towards the first outlet 212 and salt crystals convey towards the second outlet 214 due to gravity. Density of salt crystals may be higher than density of ice crystals which may help separation of these from each other within the liquid. In other words, the density difference may help the salt crystals to sink within the liquid or in other terms sink to a bottom portion of the internal space 210 of the crystallization chamber 200. It may, however, be possible that some of the salt crystals may be conveyed via the first outlet 212, even though, the intention is to discharge mainly ice crystals 301 via the first outlet 212. Matter, preferably mainly comprising ice crystals, discharged via the first outlet 212 may undergo to a filtration step such as suction filtration, and/or a washing step. In case the ice crystals comprise fractions of salt, it may be preferably to treat the ice crystals with a clarifier. Since the crystallization chamber may be arranged inclined with respect to the horizontal axis, it may play a role in how salt crystals will be gathered at an end of the second outlet. The salts may be, in practice, discharged together with the liquid via the second outlet.

The unfrozen liquid discharged via the second outlet 214 may undergo to further treatment. For example, washing and/or separation step in which the temperature will be maintained at a such level that inhibits and/or prevents salts to dissolve to the liquid. In other words, the solubility of salts will be substantially small or maintained at a substantially low level.

It should be noted that the term "unfrozen liquid" that is discharged from the internal space via the second outlet may comprise in minor portions ice crystals and/or salt crystals. The unfrozen liquid is partly used herein to clarify the liquid from which at least a portion of ice crystals may have been crystallized (and/or discharged). The "unfrozen liquid" may be called also as concentrate and/or liquid within the internal space.

According to an embodiment, shown in Figures 1-4, the conveyor means 230 comprises the mixing means 220. In other words, the conveyor means and the mixing means may form a uniform entity, i.e., the means may comprise a first part and a second part wherein the first part is the mixing means and the second part is the conveyor means. It may be possible that conveyor means comprising mixing means combined during manufacturing to form such an entity. In Figures 1-3, the conveyor means 230 comprising the mixing means 220 may form a screw conveyor type entity in which the mixing means 220 is the first part that has a function that mainly mixes the liquid within the internal space and whereas the conveyor means is the second part that has a function of conveying the liquid as well as the ice crystals therein towards the first outlet so as to discharge the ice crystals from the internal space of the ice crystallization chamber. In other words, pure water may freeze in a controlled manner from the liquid under simultaneous mixing and ice crystal removal by a two-stage mixer/screw conveyor.

In case the screw comprising the mixing means 220 and conveyor means 230 forms a uniform entity, the mixing means and the conveyor means may share a common axle 223 configured to be connected with the motor. In other words, the mixing means and the conveyor means may be connected with the motor by the common axle 223. Then, the rotation speed of the mixing means and the conveyor means is the same.

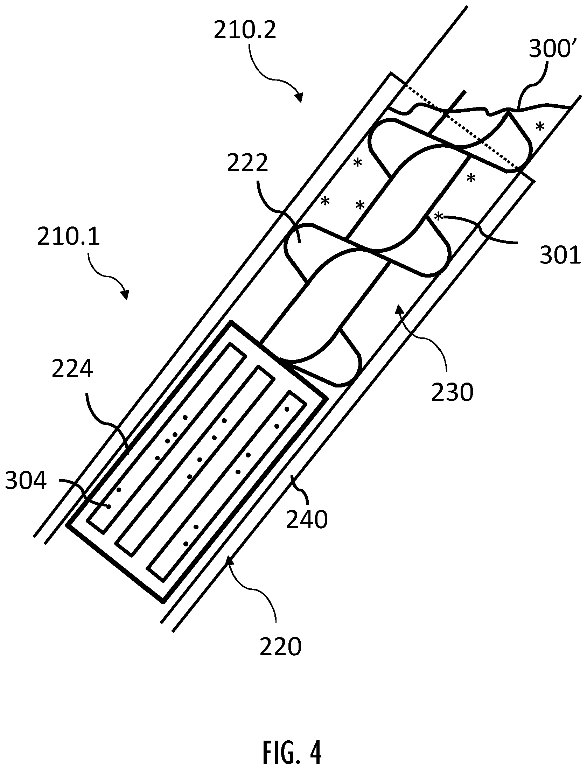

In Figure 4 is shown an embodiment wherein the mixing means 220 has a different form as the conveyor means 230. As an example, the mixing means comprises a plurality of mixing elements and openings. The mixing means may be a paddle like element comprising openings. The mixing means may comprise beaters.

According to an embodiment, the conveyor means 230 comprises a screw conveyor. In other words, the conveyor means may be a screw conveyor. In case the conveyor means 230 comprises mixing means 220, it may also be interpreted so that the screw conveyor comprises conveyor means 230 and mixing means 220. So, the screw conveyor may be formed of a first part and a second part in which the first part is the mixing means and the second part is the conveyor means. The screw conveyor may be connected with a motor 250 which controls rotation of the screw conveyor. The rotation of screw is depicted in Figures 1-2 with a symbol "R1". Advantageously, by controlling an inclination angle of the crystallization chamber, in other word inclination of the internal space and by controlling rotation speed of the screw conveyor, it may be possible to control amount of ice crystals fed out via the first outlet. The desirable rotation speed may be found based on the experiments with the apparatus and may depend on the properties of the liquid to be treated with the crystallization apparatus. In practice control of rotation speed of the screw conveyor (comprising, preferably, the mixing means and conveyor means) may prevent ice crystal formation on the internal walls of the internal space. Therefore, the screw conveyor may not be stuck during the process. The screw may be dimensioned so that a space between an internal wall of the internal space 210 and the mixing element and/or the conveyor is substantially free from clearance. In other words, the screw may substantially scrape the ice from the internal walls of the internal space 210.

In other words, according to an embodiment of the invention, the crystallization apparatus 100 of liquid 300 comprises: a crystallization chamber 200 comprising an internal space 210 having a first portion 210.1 and a second portion 210.2. The crystallization chamber 200 receives said liquid 300 via a feeding inlet 310 arranged within the chamber 200. A cooling element 240 cools the liquid within the internal space 210 for lowering temperature of the liquid such that ice crystals 301 will be formed within the liquid. The crystallization apparatus 100 comprises a screw conveyor formed of a mixing means 220 arranged within the internal space at the first portion 210.1 and mixes the liquid therein and conveyor means 230 extending at least within the internal space 210 and conveys at least part of the ice crystals 301 from the liquid towards a first outlet 212 arranged at the second portion 210.2 and to feed out via the first outlet 212 the at least part of the ice crystals 301 from the internal space 210 of the crystallization chamber 200. The screw conveyor may comprise fins for forming a conveying part and a mixing part. The mixing part comprising fins may comprise through holes and/or through openings therein.

In case the liquid comprises salt, by controlling an inclination angle α of the crystallization chamber and by controlling rotation speed of the screw conveyor, it may be possible to control the amount of salt crystals in the unfrozen liquid to be discharged via the second outlet 214. In case the liquid, which is introduced into the internal space, comprises salt, the salt may be dissolved in the liquid during introduction. In such a case, the liquid in the crystallization apparatus 100 may undergo for two separate phase transition due to cooling. In a first phase transition liquid freezes to ice crystals when temperature of the liquid is lowered. When the ice crystals are formed within the liquid, it influences the concentration of the liquid so that the concentration of the liquid will increase. Increase of concentration may result in to a lower the freezing point of the liquid. Temperature and/or concentration of the liquid may evolve so that a eutectic point (or eutectic conditions) will be reached. The term eutectic conditions refer to circumstances in which ice crystallization and salt crystallization occur within the liquid. In other words, during eutectic conditions, temperature and concentration of the liquid are such that ice crystallization and salt crystallization occur within the liquid. This means that there may occur a second phase transition in which salts dissolved within the liquid starts to crystallize within the liquid. In other words, then the liquid may comprise both ice crystals and salt crystals (in a solid form) at the same time. There occur two solids formation at the same time i.e., ice formation and salt formation. When both ice crystals and salt crystals are formed within the liquid, the phenomena may be called as a eutectic freeze crystallization. So, by the apparatus (and/or with the method) it may be possible to recover ice (preferably pure water) and salt from the liquid.

In case the ice crystals comprise impurities, such as, salt, it may be possible to have a clarification step by a clarifier. The clarifier works as a separator so that preferably ice crystals will be located on top portion of the clarifier and salt crystals will be sink to the bottom of the clarifier. In the clarifier, the matter inside of it will be settled for separating matters. The clarifier may be, for example, a lamella clarifier.

When the unfrozen liquid comprising salt crystals are discharged via the second outlet 214, that discharged liquid comprising salt crystals may undergo to further treatment. It may be possible that discharged liquid comprising salt crystals may undergo vacuum filtration, or in other words, suction filtration so as to separate salt particles from the liquid. This may be an efficient way to recover salt crystals from the liquid. Salt crystals may be utilized in industrial processes and/or other applications. For example, salt crystals comprising sodium chloride (NaCl) may be utilized in antifreeze and/or de-icing/anti-icing applications such as road de-icing salt. Salt crystals comprising calcium chloride (CaClz) may be utilized in dedusting/anti-dusting and/or dust control applications for mitigating dust problems. The unfrozen liquid comprising salt crystals and/or impurities, discharged from the internal space 210 of the crystallization chamber 200, may be treated with a clarifier.

According to an embodiment, the crystallization apparatus 100 comprises a clarifier for treating discharged matter, from the internal space 210 of the crystallization chamber 200, comprising ice crystals, impurities and/or salt crystals. In other words, ice crystals (which may comprises impurities and/or salt crystals) discharged via the first outlet 212 of the internal space 210 of the crystallization chamber 200 may be treated with the clarifier. Alternatively or in addition, the unfrozen liquid comprising impurities and/or salt crystals discharged from the second outlet 213 may be treated with the clarifier.

According to an embodiment, fins 222 of the screw conveyor comprises through openings 224 configured to form the mixing means 220 at the first portion 210.1 of the internal space 210. In other words, the first portion 210.1 may be configured to receive the mixing means 220.

According to an embodiment, fins 222 of the screw conveyor comprises through holes 224 at the first portion 210.1 configured to form the mixing means 220. The first portion 210.1 may be configured to receive the mixing means 220. In other words, the fins with through holes may form the mixing means. Figure 3 illustrates a portion of the crystallization apparatus of liquid according to an embodiment. The screw conveyor comprises the mixing means 220 and the conveyor means 230. The fins of the screw conveyor comprise through holes at the first portion configured to form the mixing means. The number of holes within the fins may vary and sizes of the through holes may vary depending on the mixing needs.

According to an embodiment, fins 222 of the screw conveyor comprises through holes 224 and/or through openings 224 at the first portion 210.1 configured to form the mixing means 220.

As illustrated in Figures 3 and 4, since the crystallization chamber 200 (or particularly the internal space 210 of the crystallization chamber 200) is at the inclined angle α, the liquid within the internal space 210 has a surface 300' having a greater cross-section than the cross-section of the internal space 210. This may help in controlling the discharge of the amount of the ice crystals from the internal space 210 of the crystallization chamber 200. In other words, since the liquid surface is substantially horizontal, it is substantially at inclined angle with respect to the longitudinal axis A. Since there is formed substantially sharp edge of liquid comprising ice crystals, the control of discharge of ice crystals is improved. When assembled in place, the mixing means and the conveyor means may share a common longitudinal axis A with each other. In other words, the mixing means and the conveyor means may be arranged along the same longitudinal axis A. In further other terms, when assembled in place, the mixing means and the conveyor means may share a common rotational axis with each other. In other words, the mixing means and the conveyor means may be arranged along the same rotational axis.

The conditions that may have an impact on ice crystallization and/or salt crystallization may comprise temperature of the cooling liquid, temperature of the liquid that is fed into the internal space 210 of the crystallization chamber 200, liquid flow (velocity) within the internal space 210 of the crystallization chamber 200 (in other words, time how long the liquid stays is within the internal space 210 and how discharged) and/or the inclination angle α.

Figure 3 illustrates that the mixing means and conveyor means have a shaft 221. The shaft may also be called as a rotation shaft (or axle). The shaft may be connected with the motor so as to rotate the mixing means and the conveyor means. It may be possible that at least a portion of the mixing element is substantially free from a shaft so as to affect on the mixing of the liquid. In other words, a portion of the mixing element may be shaftless.

According to an embodiment, the crystallization apparatus 100 comprises a washing apparatus 400 configured to wash the at least part of the ice crystals 301 fed out from the crystallization chamber 210. The washing apparatus 400 may comprise a washing equipment 401 which feed washing liquid 402 towards the ice crystals fed out from the crystallization chamber 210. The washing liquid may be water and/or deionized water. Temperature of the washing liquid 402 may be above 0 °C, preferably within a range of about 0°C to about 10 °C.

When the ice crystals 301 are discharged from the crystallization chamber 210, there may be a dedicated area to store at least part time the discharged ice crystals. The ice crystals 301 may be discharged to the washing apparatus 400. In case the ice crystals 301 settle in one place or they have been discharged from the crystallization chamber 210 for the washing apparatus, an area comprising substantially merged ice crystals 301' may be formed. During washing the ice crystals 301, it may be possible that at least partially melted part 301" may be formed. The ice crystals comprise substantially frozen water. It may be possible that the ice crystals may comprise some impurities in minority portion, though. The ice crystals may form substantially slush 301', 301". The slush may comprise of different slush formations: a first slush part 301' may be icier while a second slush part 301" may be more melt. It may be possible that at least the second slush part 301" has undergone to washing. Washing may melt the ice crystals so as to form more watery form.

The term slush may be understood like a partly melted snow and/or partly melted ice crystals, i.e. like at least partly watery ice crystals.

According to an embodiment, the washing apparatus 400 comprises a conveyor 410 for conveying washed ice crystals. The conveyor 410 may be called also as a second conveyor 410. In other words, the ice crystals 301 may be discharged from the internal space 210 of the crystallization chamber 200 to the conveyor 410 of the washing apparatus 400. On the conveyor 410 of the washing apparatus 400, the ice crystals 301 may form a slush 301', 301". The washing equipment 402 may be arranged substantially above the conveyor 410 of the washing apparatus 400 so that washing liquid may be distributed on the slush 301', 301". The washing equipment 401 may comprise spraying means. Thus, the liquid may be sprayed on to the slush 301', 301". The temperature of the washing liquid may vary. Preferably, the washing liquid is water and/or deionized water. So, ice particles removed from the internal space 210 from the crystallization chamber 200 may be washed by tap water and/or deionized water and dried with vacuum filtration through hollow membrane and/or filter media.

According to an embodiment, the washing apparatus 400 comprises a melting area 412 configured to melt the washed ice crystals.

It may be possible that there is a melting area 412 without a washing apparatus 400. In other words, the washing step and/or washing apparatus may be optional. According to an embodiment, the crystallization apparatus 100 comprises a melting area 412 configured to melt the ice crystals 301 discharged from the internal space 210 of the crystallization chamber 200.

According to an embodiment, the conveyor 410 for conveying washed ice crystals comprises a belt filter and/or screw conveyor. In other words, the conveyor 410 of the washing apparatus 400 comprises a belt filter and/or screw conveyor. This means that the speed of the conveyor may be adapted with the washing event such that melted ice crystals may be discharged in a controlled manner. The melted ice crystals that have been washed by the washing machine 400, may be stored in a separate container 480. The melted ice crystals that have been washed by the washing machine 400 may be water. The melted ice crystals may be used in industrial processes.

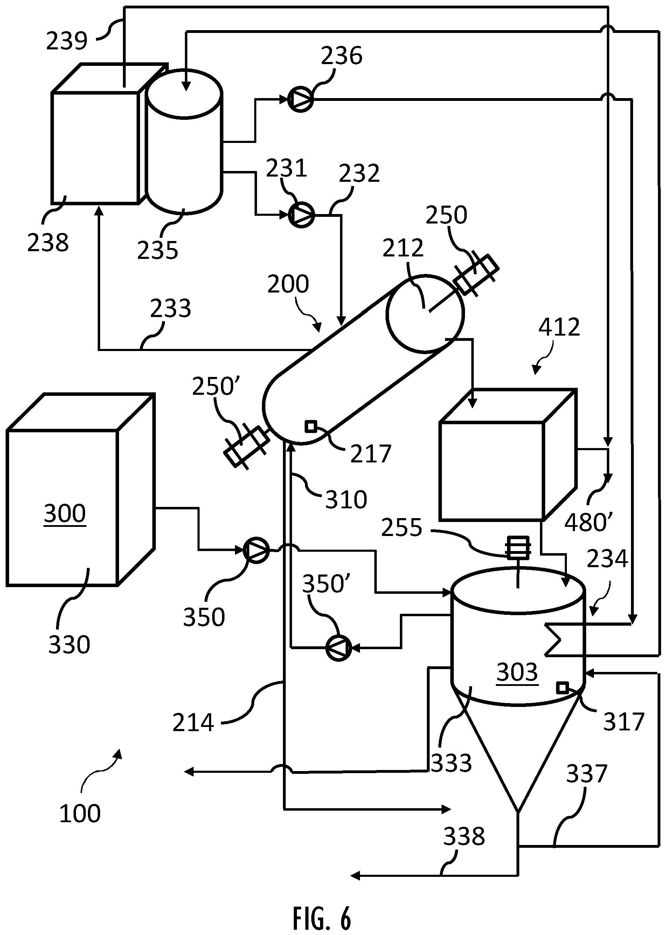

According to an embodiment, the washing apparatus 400 comprises a recycling line 403 configured to feed drained washing liquid 303 to the crystallization chamber 200. The recycling line 403 may feed the drained washing liquid 303 (rinsed liquid) to the crystallization chamber 300. The recycling line 403 may comprise one or more components, for example storage vessels. The drained washing liquid 303 may be stored in an individual storage container from which the drained washing liquid 303 may be fed into the crystallization chamber 200. Figure 1 illustrates that the drained washing liquid 303 may be stored in the individual storage container 333 from which the drained washing liquid 303 is fed into another container 330 that comprises the liquid to be fed into the crystallization chamber 200. The individual storage container 333 comprising drained washing liquid 303 may be in flow connection with the container 330 comprising liquid to be introduced into the internal space 210 of the crystallization chamber 200. It may be possible that the drained liquid is mixed with the liquid within the feeding inlet 310, for example, within the feeding channel of the feeding inlet 310. It may be even possible, that the individual storage container 333 comprising drained washing liquid 303 may be in direct flow connection with the internal space 210 of the crystallization chamber 200, meaning that the drained liquid may not be mixed with the liquid prior feeding into the internal space 210 of the crystallization chamber 200. Or it may be possible that the liquid to be fed into the crystallization chamber 200 may be mixed within the individual storage container 333 with the drained washing liquid 303 and from the individual storage container 333 liquid may be fed into the internal space 210 of the crystallization chamber 200 (cf., Figure 6).

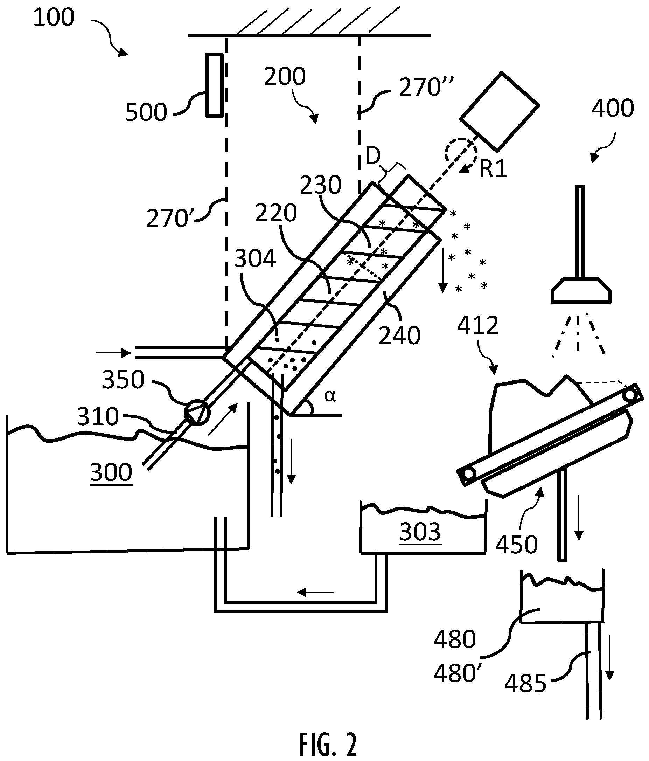

According to an embodiment, the cooling element 240 is configured to cover at least portion of the crystallization chamber 200. In other words, the cooling element may at least partially cover the at least portion of the crystallization chamber 200 as illustrated schematically in Figures 1-4. The cooling element may be a cooling jacket that at least partially surrounds the internal space of the crystallization chamber. It is possible that at least part of the internal space of the crystallization chamber is free from the cooling element, as illustrated in Figures 1-4. In other words, the first outlet may be free from the from the cooling element. So, there may be a distance D (greater than zero), depicted in Figure 2, from the first outlet to the cooling element. A first outlet area extending within the distance D from an end of the crystallization chamber may be free from the cooling element.

According to an embodiment, wherein the cooling element 240 utilizes a cooling liquid to cool the liquid in the internal space of the crystallization chamber 200. There may be an inlet line 232 for the cooling liquid to be introduced into the cooling element 240. In other words, the cooling element 240 may be arranged in fluid connection with a source of the cooling liquid. The cooling liquid may be an adequately chosen cooling substance that has a melting point below 0 °C. The cooling liquid may be, for example, glycol-based solution such as ethylene glycol and/or propylene glycol. Temperature of the cooling liquid may be below about -5 °C, for example, about -24 °C. Temperature of the cooling liquid may within a range of about from about 0 °C to about -60 °C.

According to an embodiment, the crystallization apparatus 100 comprises a weighing machine 500 on which the crystallization chamber is weighted during a process.

According to an embodiment, inclination angle α is controllable. In other words, the inclination angle α may be automatically adjusted and/or changed. The inclination angle α may be controlled by a leg comprising hydraulic means. The hydraulic means may comprise, for example, a hydraulic cylinder.

As illustrated in Figure 1, the weighing machine 500 may be arranged underneath at least one leg 270 that holds the crystallization chamber 200 in place. A length of the leg 270 may be adjustable so that the inclination angle α may be changed depending on the application. The leg 270 may comprise hydraulic means to adjust the length. The weighing machine 500 may be a scale. There may be at least one weighing machine 500 arranged with the apparatus. By utilizing the weighing machine 500, the weight of the liquid inside the crystallization chamber 200 may be followed. In other words, by knowing the weight of the crystallization chamber 200, it may be possible to control rotation of the screw conveyor as well as introduction of liquid into the crystallization chamber. During the process, the weight of the crystallization chamber 200 may be controlled to be substantially constant.

Referring now to Figure 2 in which the crystallization chamber is top supported. In such a case, the crystallization chamber may hang from the roof or from the support material, for example, by hanging means 270', 270". The hanging means may comprise supporting rods and/or hanger rods. The weighing machine 500 may be arranged in connection with the supporting rods and/or hanger rods. The number of the hanging means may vary in practice depending on the application. In case the crystallization chamber is arranged to hang, the hanger rods and/or supporting rods may be configured to be controllable. The hanging means 270', 270" may be adjustable so that their length may be changeable so as to change a vertical positioning as well as the inclination angle α. In other words, by changing the length of the hanger rods and/or supporting rods, it may be possible to control inclination of the crystallization chamber.

According to an embodiment, the crystallization chamber is top supported or bottom supported. The bottom support may comprise a supporting means arranged at the vicinity of the second outlet. In other words, the supporting means may be opposite the first outlet.

The motor 250 that controls rotation of the screw conveyor may be supported from top or from a bottom. The motor may be connected with the crystallization chamber so that it is maintained at a correct position in response to the crystallization chamber, even though, inclination angle of the crystallization chamber (and/or in other words, the inclination of the internal space) is varied.

According to an embodiment, the crystallization apparatus 100 a weighing machine 500 in which the crystallization chamber is weighted during a process.

Referring still to Figure 1, the crystallization apparatus 100 of liquid may comprise a control unit 600 configured to control operation of the crystallization apparatus 100 of the liquid. The control unit 600 may comprise means to measure process parameters. The crystallization apparatus 100 may comprise at least one temperature measurement sensor for monitoring temperature of the liquid within the internal space 210 of the crystallization chamber 200. The crystallization apparatus 100 may comprise at least one concentration measurement means to monitor concentration of the liquid. The crystallization apparatus 100 may comprise at least one conductivity measurement means to monitor conductivity of the liquid, for example, within the internal space 210 of the crystallization chamber 200. The control unit 600 may control operation of the crystallization apparatus 100 of the liquid in response to at least one of temperature within the internal space 210 of the crystallization chamber 200, weight of the crystallization chamber 200 and/or concentration of the liquid within the internal space 210. The control unit 600 may control operation of the motor 250, washing machine 400, conveying means at the washing machine and/or introduction of the drained washing liquid into the crystallization chamber. The liquid may be introduced into the internal space 210 of the crystallization chamber 200 with a constant flow of liquid. The operation of the screw conveyor may be controlled in response to the constant flow of liquid into the crystallization chamber. The control unit 600 is applicable also for other embodiments.

According to an embodiment, pressurized air is fed into the internal space 210 of the crystallization chamber 200. This may help separation of the ice crystals from the liquid and/or conveyance of ice crystals towards the first outlet 212. Alternatively or in addition, introduction of pressurized air fed into the internal space 210 of the crystallization chamber 200 may help the salt crystals to be guided towards the second outlet 214. Utilization of pressurized air may help mixing the liquid within the internal space 210 of the crystallization chamber 200.

According to an embodiment, the feeding inlet 310 is arranged at the first portion 210.1 of the internal space 210. In other words, the liquid may be fed into the first portion 210.1 of the internal space 210.

In Figures 1-2, the first portion 210.1 is located underneath the second portion 210.2. Since the internal space 210 comprises the first portion 210.1 and the second portion 210.2, the first portion 210.1 and the second portion 210.2 are in fluid connection with each other. In other words, the first portion 210.1 and the second portion 210.2 may be arranged in sequential order along the longitudinal central axis A. The first portion 210.1 and the second portion 210.2 may have a same cross-section whereas their longitudinal dimension may differ. In practice the longitudinal length of the internal space 210 is greater than a cross-sectional diameter of the internal space 210. A length of the first portion 210.2 may be about (2/3)*L and the second portion may have a length of about (1/3)*L where the letter L depicts the whole length of the internal space 210 and/or the length of the crystallization chamber 200. The length of the first portion 210.2 may be within a range of about (1/4)*L to about (2/3)*L and the second portion may have the length within a range of about (1/3)*L to about (3/4)*L where the letter L depicts the whole length of the internal space 210and/or the length of the crystallization chamber 200. The cooling element may extend around the internal space 210 within a range from about (1/10)*L to about L.

According to an embodiment, the crystallization apparatus 100 comprises at least one cooling circulation line and/or at least one heating circulation line. By this way, for example, cool from ice crystals may be utilized in pre-cooling the liquid prior feeding into the internal space 210 of the crystallization chamber 200. Heat from the apparatus (e.g. from the motor and/or cooling machine), may be utilized in heating the ice crystals 301 discharged from the internal space 210 of the crystallization chamber so as to speed-up their melting process. Alternatively or in addition, heat exchanged from the liquid that is cooled within the internal space 210 of the crystallization chamber 200 may be utilized in heating the ice crystals 301 discharged from the internal space 210 of the crystallization chamber so as to speed-up their melting process.

The first outlet 212 may comprise a guiding element for guiding the ice crystals out from the crystallization chamber 200. The guiding element may be slanted and/or adjustably slanted. The guiding element may be a plate-like structure. In case the ice crystals are substantially pure ice, the guiding element may comprise a heating means so as to heat the discharged ice crystals on the guiding plate.

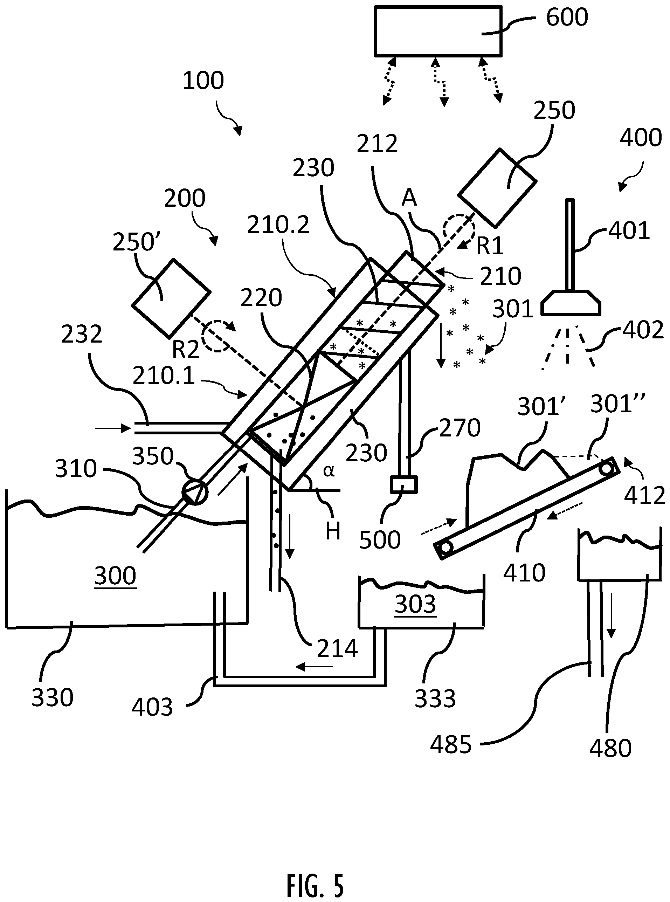

Examine now Figure 5, which illustrates an embodiment wherein the mixing means 220 comprises a shaft configured to be connected with a first motor 250' and the conveyor means 230 comprises a shaft configured to be connected with a second motor 250. In other words, the mixing means may have a different rotational speed (R2) than the rotational speed (R1) of the conveyor means. It may, thus, be possible that the mixing means 220 and conveyor means 230 may be separate components arranged within the internal space 210 of the crystallization apparatus 200. It may be possible that the mixing means may rotate counterclockwise and clockwise. In other words, the mixing means may mix with two rotational directions the liquid within the internal space 210 of the crystallization chamber 200. The shaft (or in other terms axis of the shaft) of the mixing means may be perpendicular to the shaft (or in other terms axis of the shaft) of the conveyor means. It may be possible that the first motor 250' may be connected with the shaft of the mixing means 220 from the bottom portion of the internal space 210 of the crystallization chamber 200. It may be possible that the second motor 250 may be connected with the shaft of the conveyor means 230 from the first outlet end 212 of the internal space 210 of the crystallization chamber 200. In other words, the first motor 250' may be arranged substantially opposite the second motor 250'.

Examine now Figure 6 more in detail, which illustrates an embodiment of the crystallization apparatus 100 according to an embodiment.

According to an embodiment, the crystallization apparatus 100 comprises a cooling machine 238 for cooling the cooling liquid. In other words, the cooling machine 238 may be configured to cool the cooling liquid within the cooling liquid storage 235.

According to an embodiment, the cooling machine 238 is connected with a cooling fluid storage 235 for cooling the cooling liquid. The cooling liquid storage 235 may be connected via the inlet line 232 with the cooling element 240 of the crystallization chamber 200. There may be a cooling liquid return line 233 from the cooling element 240 to the cooling liquid storage 235. In other words, the cooling liquid may flow from the cooling fluid storage 235 via the inlet line 232 into the cooling element 230 and from the cooling element 230 via the cooling liquid return line 233 back into the cooling liquid storage 235. The cooling liquid from the cooling liquid element 230 may be flown via the cooling machine 238 for cooling the cooling liquid prior to feeding it back into the cooling liquid storage 235. The inlet line 232 may comprise at least one pump 231 for feeding the cooling liquid into the cooling element 240.

It may be possible that the cooling machine 238 produces heat during cooling the cooling liquid. Heat generated by the cooling machine may be utilized in heating the ice crystals discharged from the internal space 210 of the crystallization chamber 200.

The melting area 412 may comprise a washing apparatus configured to clean the ice crystals. The melting area 412 may comprise a suction filtration to separate impurity matter/particles, such as salt, from the ice crystals. The melting area 412 may comprise a clarifier. Specifically, in case the salt crystals comprise salts as impurity matter, the clarifier may be used to separate salt from the melted ice crystals (from water). Substantially clean water 480' may be discharged from the melting area 412. Washing liquid (drained washing liquid) and/or impurity matter (for example, salt) may be discharged from the melting area 412 for further processes, for example, into the individual container 333. Salt may be dissolved within the drained washing liquid.

According to an embodiment, heat 239 from the cooling machine 238 may be utilized in the melting area 412. Heat 239 from the cooling machine 238 may be utilized in melting the ice crystals within the melting area and/or discharged from melting area. Alternatively or in addition, heat 239 from the cooling machine 238 may be utilized in heating water discharged from the melting area 412.

Figure 6 illustrates that the individual container 333 may comprise a heat exchanger 234. The heat exchanger 234 may be connected with the cooling liquid storage 235. In other words, cooling liquid may cool the liquid within the individual container 333. The individual container 333 may be connected with the heat exchanger 234 with a connection comprising at least one pump 236 for feeding the cooling liquid from the cooling liquid storage 235 to the heat exchanger 234 arranged within the individual container 333. From the heat exchanger 234 there is a return path back to the cooling liquid storage 235.

As can be seen in Figure 6, the liquid to be fed into the crystallization chamber 200 may be stored in the container 330 which is in flow connection with the individual container 333 that may comprise the drained washing liquid 303. The mixture of the liquids will be considered then as the liquid to be introduced into the internal space 210 of the crystallization chamber 200 to be treated with. The feeding inlet 310 may comprise the connection from the container 330 comprising the liquid 300 via the line comprising at least one pump 350, 350' and the individual container 333 to the internal space 210 of the crystallization chamber 200. The feeding line between the individual container 333 and the internal space 210 of the crystallization chamber 200 may comprise at least one pump 350' for feeding liquid from the individual container 333 into the internal space 210 of the crystallization chamber 200. The feeding line between the container 330 and the individual container 333 may comprise at least one pump 350 for feeding liquid from the container 330 into the individual container 333.

The liquid 300 to be treated in the crystallization chamber 200 may be fed from the container 330 by the pump 350 into the individual container 333 and from the container 333 by the pump 350' into the crystallization chamber 300. The amount of feeding the liquid to be treated is based on the amount of discharging the ice crystals 310 from the crystallization chamber 300. In other words, the surface of the liquid within the crystallization chamber 200 may be maintained by feeding the liquid to be treated into the crystallization chamber 200 (and based on the discharge of ice crystals from therein). Mass within the crystallization may be substantially kept constant (by feeding in via the inlet the liquid and discharging salt crystals via the outlet). Feeding ratio of the liquid into the crystallization chamber and discharging ration ice crystals from the crystallization chamber may be substantially equal.

The individual container 333 may comprise a motor 255 connected with mixing means of the individual container 333 for mixing liquid therein. The individual container 333 may function as a temporary storage container and as pre-cooling chamber for the liquid to be treated in the crystallization chamber 200. So, the temperature of the liquid 300 may be lowered within the individual container prior to feeding it into the crystallization chamber 200. This, pre-cooling, has the advantage, that the liquid introduced into the crystallization chamber 200 will not melt the ice crystals therein. This results in more stable conditions within the crystallization chamber 200.

The individual container 333 may comprise a recirculation connection channel 337 for recirculating at least portion of the liquid 303.

According to an embodiment, salts may be discharged from the individual container 333. This embodiment is schematically illustrated in Figure 6, but it may be applicable in other embodiments shown, for example, in Figures 1 and 2. So, in case salt formation takes place in the individual container 333, it may be possible to discharge salt crystals via the channel 338 from the individual container 333. The channel 338 for discharging salts from the individual container 333 may be located at the bottom portion of the individual container 333. Namely, salts within the individual container 333 may be gathered at the bottom portion of the container 333 similarly as in the crystallization chamber 200. In other words, salts from the individual container 333 may be discharged via the bottom portion of the individual container 333. Salts from the individual container 333 may be discharged together with the liquid within the individual container 333. This liquid with salts discharged from the individual container 333 may undergo to vacuum filtration so as to recover salt/s. The washing water utilized in the vacuum filtration may be fed into the individual container 333 in which it is mixed with the liquid therein prior to feeding into the crystallization chamber 200. So, the washing water from the vacuum filtration may be fed into the individual container 333, for example, via the recirculation connection channel 337.

As illustrated in Figure 6, the crystallization chamber 200 may comprise at least one of temperature sensor, conductivity sensor and/or pH sensor for monitoring conditions within the internal space 210 of the crystallization chamber 200. Such a sensor is shown schematically in Figure 6 with a reference 217.

The crystallization chamber 200 may comprise at least one temperature measurement sensor for monitoring temperature of the liquid within the internal space 210 of the crystallization chamber 200. There may be other sensors arranged in connection with the crystallization chamber 200. For example, alternatively or in addition, the crystallization apparatus 100 may comprise at least one concentration measurement means to monitor concentration of the liquid within the internal space 210 of the crystallization chamber 200. The crystallization apparatus 100 may comprise at least one conductivity measurement means to monitor conductivity of the liquid, for example, within the internal space 210 of the crystallization chamber 200.

The individual container 333 may comprise at least one of temperature sensor, conductivity sensor and/or pH sensor for monitoring conditions within the individual container 333. Such a sensor is shown schematically in Figure 6 with a reference 317.

Figure 6 illustrates that the mixing means 220 may comprise its own motor 250' for mixing the liquid within the internal space 210 of the crystallization chamber 200, and the conveyor means 230 may comprise its own motor 250 for conveying at least part of the ice crystals from the internal space 210 of the crystallization chamber 200.

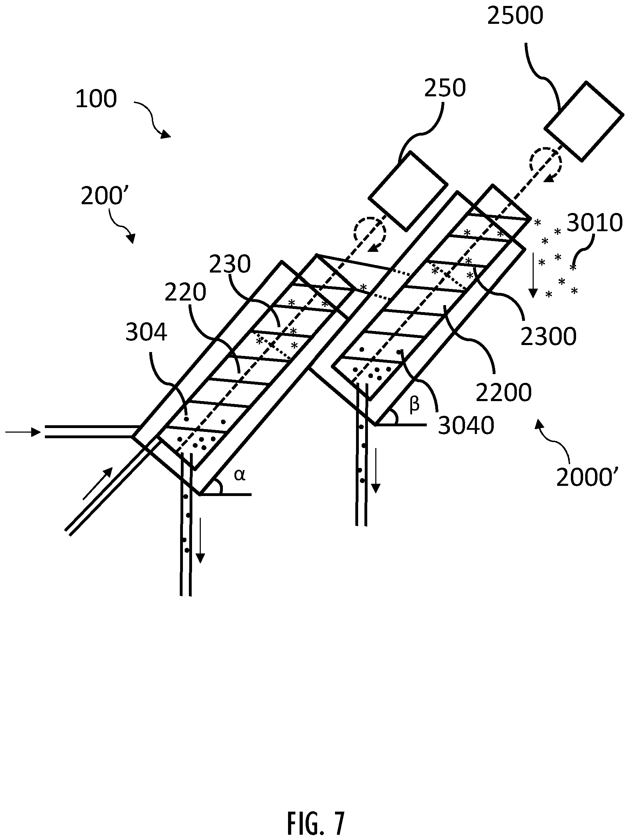

Referring now to Figure 7, according to an embodiment, the crystallization apparatus 100 may comprises a first crystallization chamber 200' and a second crystallization chamber 2000' arranged in series with each other. First the liquid to be treated is first introduced into the internal space of the first crystallization chamber 200' in which the liquid is cooled. At least partially frozen liquid and/or ice crystals will be fed into the second crystallization chamber 2000'. The at least partially frozen liquid and/or ice crystals from the first crystallization chamber 200' may be fed either directly or indirectly into the second crystallization chamber 2000'. Directly herein means that the at least partially frozen liquid and/or ice crystals are fed without other processes (such as melting step). In case the at least partially frozen liquid and/or ice crystals are fed indirectly into the second crystallization chamber 2000', the at least partially frozen liquid and/or ice crystals may be melted and/or washed before introduction into the second crystallization chamber 2000'. The second crystallization chamber 2000' may comprise within an internal space comprising a conveyor means 2200 and mixing means 2300. The salt crystals are depicted as reference 3040 and ice crystals 3010 for the second crystallization chamber 2000'. The conveyor means 2200 and mixing means 2300 may be connected with a motor 2500. The motor 2500 may be an electric motor.

Another aspect of the invention relates to a crystallization method of liquid. Figures 1 - 7 disclose a suitable crystallization apparatus to carry out a method of crystallization of liquid according to embodiments of the invention.

Referring to Figure 5 that comprises at least partly the steps of the crystallization method of liquid according to an embodiment.

According to an embodiment, the crystallization method 900 of liquid 300 comprises the steps of: feeding 901 liquid 300 through a feeding inlet 310, by a feeder 350, into an internal space 210 of a crystallization chamber 200. Mixing 902, by mixing means 230, the liquid 300 in the internal space 210 of the crystallization chamber 200. Cooling 903, by cooling means 240, the liquid within the internal space of the crystallization chamber for lowering temperature of the liquid such that ice crystals 310 will be formed within the liquid. Conveying 904, by conveyor means, at least part of the ice crystals 310 along the internal space 210 of the crystallization chamber 200 and feeding out 905 the at least part of the ice crystals 301 from the crystallization chamber 200 via a first outlet 212. The mixing 902, cooling 903 and conveying 904 are performed simultaneously 906 within the internal space 210 of the crystallization chamber 200.

The internal space 210 is substantially hollow space which is configured to receive the mixing means 220 and the conveyor means 230. The feeder that feeds the liquid through the feeding inlet 310 may comprise a pump 350. The mixing means 220 may comprise a mixing element. The cooling means 240 may be a jacket arranged at least partially around the internal space 210 of the crystallization chamber 200. The conveyor means 230 may comprise a screw.

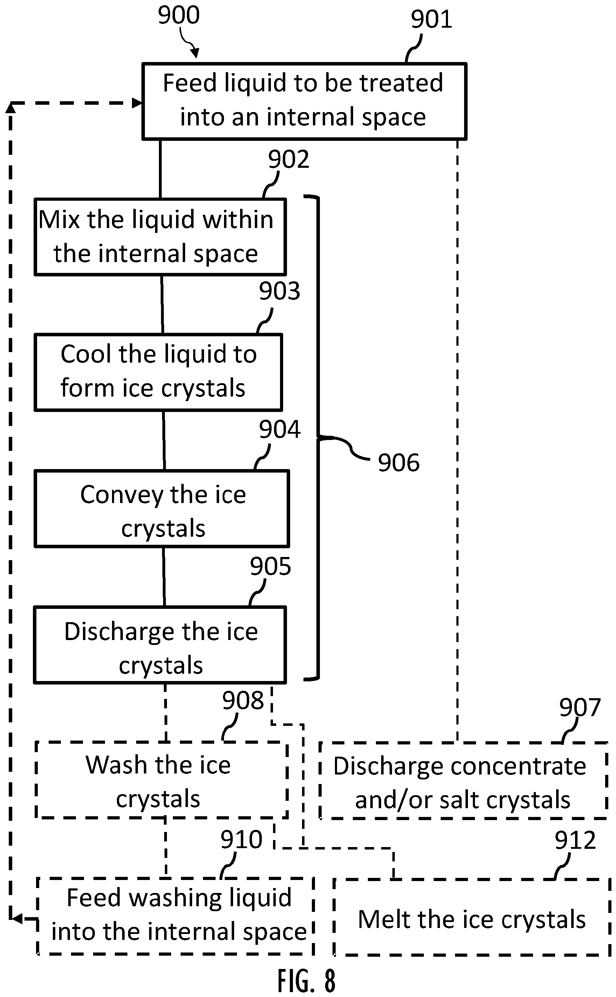

Pure water may freeze within the liquid under simultaneous mixing and cooling, and ice crystals may be removed from the liquid by the conveyor means. Pure water in the form of ice crystals 301 may be collected and removed from the liquid 300. Since the mixing 902, cooling 903 and conveying 904 are performed simultaneously 906 within the internal space 210 of the crystallization chamber 200, also discharging of the ice crystals 301 (i.e., feeding out 905 the ice crystals 301) from the internal space 210 of the crystallization chamber 200 may be performed simultaneously, as illustrated in the embodiment in Figure 8 with curly bracket (braces). So, the mixing 902, cooling 903 and conveying 904 may be performed in the internal space 210 of the crystallization chamber 200 substantially at the same time. The purpose is to discharge mainly ice crystals 301 from the liquid 300 via the first outlet 212 while hardly any of the liquid 300 will be discharged via the first outlet 212.

In this document, the term discharge may be understood as a synonym to remove, take out, feed out, send out and/or extract and these words may be used interchangeably.

According to an embodiment, the method comprises a step of feeding liquid 300 through the feeding inlet 310, by the feeder 350, into the first portion 210.1 of the internal space 210.

According to an embodiment, the method comprises a step of conveying 904, by the conveyor means 230, at least part of the ice crystals 301 along the internal space 210 of the crystallization chamber 200 and feeding out 905 the at least part of the ice crystals 301 from the crystallization chamber 200 via the first outlet 212 located at the second portion 210.2 of the internal space 210. In other words, at least part of the ice crystals 301 from the internal space 210 of crystallization chamber 200 will be fed via the first outlet 212.

According to an embodiment, the method further comprises steps of feeding out 907 unfrozen liquid through a second outlet 214 arranged at a first portion 210.1 of the internal space 210 of the crystallization chamber 200.

According to an embodiment, the method comprises a step wherein the cooling element 240 cools the liquid 200 within the internal space 210 such that also salt crystals 304 will be formed within the liquid 300 and wherein the second outlet 214 feeds out also at least part of the salt crystals 304 within the unfrozen liquid from the internal space 210. In this case, the liquid to be treated comprises salt. In other words, within the internal space 210 of the crystallization chamber 200, there may occur two phase changes: freeze of water to ice crystals 301 and salts dissolved within the liquid to salt crystals 304. Salts within the unfrozen liquid, may be recovered from the liquid, for example, by separation and/or filtration.

According to an embodiment, the method comprises a step of controlling eutectic conditions within the internal space 210. The method may comprise steps of monitoring at least one of temperature, conductivity and/or concentration of the liquid within the internal space. The crystallization chamber may comprise one or more measurement sensors to monitor at least one of temperature, conductivity and/or concentration of the liquid within the internal space. For example, when the desired concentration level is triggered by the measurement, the control unit may open the flow connection via the second outlet 214. During the eutectic conditions water of the liquid will freeze (forming ice crystals 301) and salts dissolved in the liquid will crystallize (forming salt crystals 304).

Due to gravity, the salt crystals gather at the first portion 210.1 of the internal space 210. In other words, the salt crystals 304 may gather at a bottom portion of the internal space 210 of the crystallization chamber 200. So, the first portion 210.1 of the internal space 210 may be called as a bottom portion of the crystallization chamber 200. The ice crystals 301 are conveyed by the conveyor means towards the first outlet 212. The first outlet 212 may be arranged opposite the second outlet 214. The first outlet 212 is arranged at the second portion 210.2 of the internal space 210. The second portion 210.2 of the internal space 210 may be called as a top portion of the crystallization chamber 200. The first portion 210.1 and the second portion 210.2 of the internal space 210 are in fluid connection with each other. The unfrozen liquid may comprise salts and/or impurities. The impurities within the liquid may be unwanted metals, organic compounds and/or ions originating from industrial process may be discharged from the internal space and may be recovered. Therefore, by discharging via the second outlet 214 concentrate (i.e., unfrozen liquid) from the internal space 210, one may also be able to recover valuable particles from the liquid 200, for example, by separation and/or filtration. This particularly, reduces the liquid and/or solid waste. The filtration may comprise a vacuum filtration.

Advantageously, the method of crystallization liquid is affordable, extremely simple and efficient to remove unwanted metals, organic compounds and ions from industrial waste streams. Particularly, the method may be well suitable for substantially any water mixtures comprising unwanted metals, organic compounds and ions.

According to an embodiment, the method comprises a step of washing 908, by a washing apparatus 400, the at least part of the ice crystals 301 fed out from the internal space 210 of the crystallization chamber 200. In other words, the ice crystals 301 discharged from the internal space 210 of the crystallization chamber 200 may be rinsed, for example, by water. The temperature of water for rinsing the ice crystals 301 may be within a range of about 5 °C to about 70 °C.

According to an embodiment, the method comprises after washing the at least part of the ice crystals 301, a step of feeding 910, by feeding channel 403, washing liquid into the internal space 210 of the crystallization chamber 200. The washing liquid means liquid that has cleaned the ice crystals 301. The washing liquid may be called, in other words, drained washing liquid. The washing liquid may be fed directly into the internal space 210 of the crystallization chamber 200. The washing liquid may be mixed with the liquid 300 prior feeding the liquid (comprising the washing liquid) into the internal space 210 of the crystallization chamber 200. The washing liquid may be treated before it is introduced into the internal space 210 of the crystallization chamber 200. For example, the washing liquid may be separated and/or filtered prior feeding into the internal space 210 of the crystallization chamber 200.

The ice discharged from the internal space 210 of the crystallization chamber 200 may be cleaner than the washing liquid (drained liquid). The washing liquid (drained liquid) may be cleaner than the liquid 300.

In water treatment applications, contaminated water (i.e. the liquid) may be fed, for example pumped, into the cooled crystallization chamber 200 under simultaneous mixing and ice transport/removal. Water starts to freeze and freezes at a eutectic point within the liquid. Solid ice particles (ice crystals) may be then collected from the liquid and the ice particles may then be rinsed with cooled tap water and/or deionized water. Clean ice (discharged from the internal space of the crystallization chamber) is melted, and clean water may be returned to the process. Concentrated solution comprising potentially crystallized impurities (e.g., salt) may be removed from the bottom of the internal space 210.

According to an embodiment, the method comprises a melting step 912 after the ice crystals have been discharged from the internal space of the crystallization chamber to form a second liquid, preferably pure water. The melting may be done with heating means. The heating means may comprise a heating element such as a heater. The heating means may operate at temperatures above 0 °C, for example, within a range of about 0 °C to about 10 °C. In some cases the heating means may operate about at an ambient temperature such as 20 °C.

According to an embodiment, the method comprises a step of melting, by a melter, the ice crystals 301 discharged from the internal space 210 of the crystallization chamber 200.

According to an embodiment, the method comprises a melting step 912 after the step of washing the at least part of the ice crystals discharged from the crystallization chamber which melting step 912 comprises melting, by melting means, the at least at least part of the ice crystals fed out from the internal space of the crystallization chamber to form a second liquid, preferably water. In other words, the second liquid 480' may be substantially pure water. The melting may be done with heating means. The heating means may comprise a heating element such as a heater. The melting may be conducted at the same time as washing. The melting step 912 may be conducted after the washing step.

According to an embodiment, the method comprises steps of conveying the ice crystals fed out from the crystallization chamber by a belt filter or screw conveyor. In other words, the ice crystals may be discharged from the internal space of the crystallization chamber on to the belt filter or the screw conveyor, then ice crystals may be conveyed by the belt filter or the screw conveyor. On the belt filter or screw conveyor, the ice crystals may be washed by the washing apparatus. It may then be possible that ice crystals melt during the washing step within the belt filter or the screw conveyor. After the steps of conveying the ice crystals fed out from the crystallization chamber by a belt filter or screw conveyor, the ice crystals may be melted (i.e., the melting step may be conducted after conveying the ice crystals). The melting may be conducted with a melter and/or inside of building where the temperature is above 0 °C, for example about 20 °C.

According to an embodiment, the method comprises a step wherein the second liquid 480' is fed into an industrial process by a liquid feeder 485.

According to an embodiment, the method comprises the step of cooling 903 with a cooling jacket 240 the crystallization chamber 200 wherein the cooling jacket utilizes cooling liquid that comprises a cooling substance. The cooling substance may be, for example, glycol-based solution such as ethylene glycol and/or propylene glycol. In other words, the cooling liquid may be, for example, glycol-based solution such as ethylene glycol and/or propylene glycol. The temperature of the cooling liquid may be below about -5 °C, for example, about -24 °C.

According to an embodiment, the method comprises a step of maintaining the crystallization chamber 200 inclined at a predetermined angle from the horizontal plane. It may be possible that the inclined angle α may be controlled during a process. The optimal inclination angle α may be found by testing and may be dependent on the liquid to be treated. The inclined angle α may be within a range of about 30° to about 70°.

According to an embodiment, the method comprises the steps of conveying and mixing are performed with the conveyor means 230 comprising the mixing means 220. In other words, the method comprises the steps of conveying and mixing are performed with the conveyor means comprising the mixing means arranged within the internal space 210 of the crystallization chamber 200. So, the conveyor and mixing means may be integrated with each other. In other words, it may be possible that mixing means and the conveyor forms a uniform entity comprising a first part and a second part wherein the first part is the mixing means and the second part is the conveyor means. The mixing means may comprise a mixing element and the first part comprising the mixing means may be called as a mixer part. The mixing means and the conveyor means may be arranged one after the another, in other words, sequentially. The flow of ice crystals may be mainly from the mixing means towards the conveyor means. The conveyor means discharges the at least part of the ice crystals from the internal space.

The mixing means and the conveyor means may form a screw. The first portion of the screw is formed of the mixing means 220 and the second portion of the screw is formed of the conveyor means 230. The motor 250 rotates the screw comprising the mixing means 220 and the conveyor means 230. The motor 250 may be an electric motor. In this case, rotation speed of the mixing means and the conveyor means is the same. The mixing means and the conveyor means may share a common axle 223 configured to be connected with the motor. In other words, the mixing means and the conveyor means may be connected with the motor by the common axle 223.

According to an embodiment, the conveyor means and/or the mixing means may comprise cooling means. It may be possible that an axis of the screw (e.g., the common axle 223) may comprise cooling means, for example, cooling liquid flow through the axle. This may increase the cooling effect.

According to an embodiment, the method comprises a step of monitoring a mass of the liquid and the ice crystals within the internal space of the crystallization chamber during a crystallization process. The apparatus may be arranged on a scale or the apparatus may be top supported wherein the hanging means may comprise a weighing means.

According to an embodiment, the method comprises a step wherein at least portion of the unfrozen liquid is utilized as an industrial liquid in an industrial process and/or a step wherein at least portion of the unfrozen liquid is fed via a feeding line to combustion or incineration. This means that when the unfrozen liquid is discharged from the internal space of the crystallization chamber, it may be fed to combustion or incineration plant.

According to an embodiment, the method comprises a step utilizing at least portion of the fed out ice crystals to pre-cool the liquid prior feeding into the internal space of the crystallization chamber. The method comprises a step utilizing at least portion of the fed out ice crystals from the crystallization chamber to pre-cool the liquid prior feeding into the internal space of the crystallization chamber. In other words, the method comprises a step utilizing at least portion of the discharged ice crystals to pre-cool the liquid prior feeding into the internal space of the crystallization chamber.

According to an embodiment, the method comprises a step wherein the liquid 300 fed into the crystallization chamber 200 originates from an industrial process and/or industrial waste water streams such as from a battery recycling facility. For example, in battery recycling facility, hydrometallurgical processes are utilized when recovering salts, by utilizing the method and/or apparatus according to embodiments, weak solutions or dilute solutions (liquid) may be treated to obtain strong solutions (unfrozen liquid) that may contain salt crystals that are desired to be recovered.

Even though, above the term "ice crystal" have been used in connection with the method, it may be equal to an embodiment of a crystallization method of liquid to form ice and comprising the steps of: feeding liquid through a feeding inlet, by a feeder, into an internal space of a crystallization chamber. Mixing 902, by mixing means 220, the liquid 300 in the internal space 210 of the crystallization chamber 200. Cooling 903, by cooling means 240, the liquid 300 within the internal space 210 of the crystallization chamber 200 for lowering temperature of the liquid 200 such that ice will be formed within the liquid. Conveying 904, by conveyor means 230, at least part of the ice along the internal space 210 of the crystallization chamber 200 and feeding out the at least part of the ice from the crystallization chamber 200 via a first outlet 212. The mixing 902, cooling 903 and conveying 904 are performed simultaneously within the internal space 210 of the crystallization chamber 200. In other words, liquid to form ice crystal may refer to ice formation of liquid.

According to an embodiment, the crystallization method of liquid comprises the steps of: feeding liquid through a feeding inlet 310, by a feeder 350, into an internal space 210 of a crystallization chamber 200. Mixing 220, by a screw, the liquid 300 in the internal space 210 of the crystallization chamber 200. Cooling 903, by cooling means 250, the liquid 300 within the internal space 210 of the crystallization chamber 200 for lowering temperature of the liquid 300 such that ice crystals 301 will be formed within the liquid 300. Conveying 904, by the screw, at least part of the ice crystals 301 along the internal space 210 of the crystallization chamber 200 and feeding out the at least part of the ice crystals 301 from the crystallization chamber 200 via a first outlet 212. The mixing 902, cooling 903 and conveying 904 are performed simultaneously within the internal space 210 of the crystallization chamber 200. The screw may comprise fins 222. The fins comprise through holes 224 for mixing the liquid 300. In other words, the screw may have fins 222 that comprise through holes 224 for mixing and the screw may have fins 222 that are free from the through holes for conveying the ice. The fins 222 may be designed so that they help guiding at least portion of the ice towards the first outlet 212. The fins may be designed so that they help guiding at least portion of the salt crystals 304 towards the second outlet 214.

Since preferably ice crystals formed of water will be recovered from the liquid according to embodiments, the crystallization method of liquid may be referred as the crystallization method of liquid comprising water, or the crystallization method of an aqueous liquid, or the crystallization method of an aqueous solution. Since preferably ice crystals formed of water and salts may be recovered from the liquid according to embodiments, the crystallization method of liquid may be referred as the crystallization method of liquid comprising water and one or more salts. In other words, preferably, the liquid may comprise water and/or one or more salts.

As an example, examine a liquid that is an aqueous solution comprising sodium chloride NaCl(aq). In other words, water comprising dissolved sodium chloride. The aqueous solution comprising sodium chloride is fed into the internal space of the crystallization chamber and its temperature is lowered so low that ice crystals will be formed within the solution (i.e., within the liquid). When the ice is formed within the liquid, the concentration of the liquid increases. In other words, the concentration of the unfrozen liquid increases. This (unfrozen) liquid may be called as concentrate. The ice may be conveyed from the internal space by the conveyor means and be removed. In case the circumstance within the internal space of the crystallization chamber is controlled such that a eutectic point (eutectic conditions) is met, then both ice and salt will be formed (crystallized) within the liquid. In this case the phenomena (or method) may be called as a eutectic freeze crystallization. In this case, there will be ice and solid sodium chloride (NaCl(s)) within the liquid. The liquid comprising solid sodium chloride particles may be called as saturated solution. It is possible then to discharge (let out), the ice from the internal space via the first outlet 212. The ice being substantially free from impurities (in this case NaCl). The liquid comprising solid sodium chloride particles (NaCl(s)) may be discharged via the second outlet 214. This means that the internal space 210 of the crystallization chamber 200 may be emptied from the liquid comprising salt (in solid form) and ice (in solid form). Advantageously, the liquid comprising salt (in solid form) may be discharged from an opposite end than ice (in solid form) is discharged. The liquid comprising salt (in solid form) may be discharged at the bottom portion of the internal space of the crystallization chamber. The ice may be discharged at the top portion of the internal space of the crystallization chamber.

Even though, above the term "ice crystal" have been used in connection with the apparatus, it may be equal to an embodiment of a crystallization apparatus of liquid to form ice, comprising: a crystallization chamber comprising an internal space having a first portion and a second portion and configured to receive said liquid via a feeding inlet arranged within the crystallization chamber. Mixing means arranged within the internal space at the first portion and configured to mix the liquid therein. A cooling element configured to cool the liquid within the internal space for lowering temperature of the liquid such that ice will be formed within the liquid. Conveyor means extending at least within the internal space and configured to convey at least part of the ice from the liquid towards a first outlet arranged at the second portion and to feed out via the first outlet the at least part of the ice from the internal space of the crystallization chamber. In other words, liquid to form ice crystal may refer to ice formation of liquid.

A main flow direction of ice crystals within the internal space 210 may be defined as a vector directing from the first portion 210.1 towards the second portion 210.2 along the longitudinal axis A. The first portion 210.1. may be arranged upstream of the second portion 210.2 along the longitudinal axis with respect to the main flow direction of ice crystals within the internal space 210. In other words, the mixing means 220 may be located upstream of the conveyor means 230 along the longitudinal axis with respect to the main flow direction of ice crystals within the internal space 210. In practice, the mixing means 220 may be extending from the bottom portion of the internal space 210 towards the first outlet 212 and the conveyor means 230 may extend after, or in other words downstream of, the mixing means 220 towards the first outlet 212.

In Figures 1 and 2, solid straight arrows (without reference numbers) depict for illustration purposes material (liquid and/or solid) flow. Dashed arrow depicts schematically belt conveyor direction. Dashed curved arrow depicts rotation of the screw conveyor which may be rotated also opposite direction, depending on the application and/or screw conveyor design.

It may be possible that mixing means is connected to a first motor to rotate the mixing means and the conveyor means is connected to a second motor to rotate the conveyor means. In other words, the mixing means may be rotated at a different speed than the conveyor means.

A design of the apparatus renders a modular design. It may also be possible that there are a multiple of apparatuses of crystallization liquid in a sequential order. In such a case it may be possible to recover different concentration solutions and/or salts.

It will be obvious to a person skilled in the art that, as technology advances, the inventive concept can be implemented in various ways. The invention and its embodiments are not limited to the example embodiments described above but may vary within the scope of the claims.

## Claims

1. A crystallization method of liquid, wherein the method comprises the steps of:
feeding liquid through a feeding inlet, by a feeder, into an internal space of a crystallization chamber;
mixing, by mixing means, the liquid in the internal space of the crystallization chamber;
cooling, by cooling means, the liquid within the internal space of the crystallization chamber for lowering temperature of the liquid such that ice crystals will be formed within the liquid;
conveying, by conveyor means, at least part of the ice crystals along the internal space of the crystallization chamber and feeding out the at least part of the ice crystals from the crystallization chamber via a first outlet; and
wherein the mixing, cooling and conveying are performed simultaneously within the internal space of the crystallization chamber.

2. The crystallization method of claim 1, wherein the method further comprises steps of feeding out unfrozen liquid through a second outlet arranged at a first portion of the internal space of the crystallization chamber.

3. The crystallization method of claim 2 comprising a step wherein the cooling element cools the liquid within the internal space such that also salt crystals will be formed within the liquid and wherein the second outlet feeds out also at least part of the salt crystals within the unfrozen liquid from the internal space.

4. The crystallization method of any of preceding claims comprises a step of washing, by a washing apparatus, the at least part of the ice crystals fed out from the internal space of the crystallization chamber.

5. The crystallization method of claim 4 comprises, after washing the at least part of the ice crystals, a step of feeding, by feeding channel, washing liquid into the internal space of the crystallization chamber.

6. The crystallization method of claims 4 or 5 comprises a melting step after the step of washing the at least part of the ice crystals discharged from the crystallization chamber which melting step comprises melting, by melting means, the at least at least part of the ice crystals fed out from the internal space of the crystallization chamber to form a second liquid, preferably water.

7. The crystallization method of any of claims 4 -6 wherein the method comprises steps of conveying the ice crystals fed out from the crystallization chamber by a belt filter or screw conveyor.

8. The crystallization method of any of claims 6 -7 wherein the second liquid is fed into an industrial process by a liquid feeder.

9. The crystallization method of any of preceding claims, comprising the step of cooling with a cooling jacket the crystallization chamber wherein the cooling jacket utilizes cooling liquid that comprises a cooling substance.

10. The crystallization method of any of preceding claims comprises a step of maintaining the crystallization chamber inclined at a predetermined angle from the horizontal plane.

11. The crystallization method of any of preceding claims wherein the steps of conveying and mixing are performed with the conveyor means comprising the mixing means.

12. The crystallization method of claim 11 wherein the method comprises a step of monitoring a mass of the liquid and the ice crystals within the internal space of the crystallization chamber during a crystallization process.

13. The crystallization method of any of preceding claims comprising a step wherein at least portion of the unfrozen liquid is utilized as an industrial liquid in an industrial process and/or a step wherein at least portion of the unfrozen liquid is fed via a feeding line to combustion or incineration.

14. The crystallization method of any of preceding claims comprising a step utilizing at least portion of the fed out ice crystals to pre-cool the liquid prior feeding into the internal space of the crystallization chamber.

15. The crystallization method of any of preceding claims wherein the liquid fed into the crystallization chamber originates from an industrial process and/or industrial waste water streams such as from a battery recycling facility.
